# EUROPÄISCHE PATENTANMELDUNG

(11) **EP 0 606 835 A1**
(43) Veröffentlichungstag der Anmeldung: **20.07.1994**
(21) Anmeldenummer: 94100046.5
(22) Anmeldetag: 04.01.1994
(51) Int. Cl.: G02B 23/16, G02B 7/182, F16H 49/00

(54) **Antrieb für astronomisches Teleskop**

(30) Priorität: 07.01.1993 DE 4300252
(71) Anmelder: Spaude, Helmut, D-81379 München (DE)
(72) Erfinder: Spaude, Helmut, D-81379 München (DE)

(57) **Zusammenfassung**

Die Achsen des Teleskops sind durch ein sogenanntes Überlagerungs- oder Wellengetriebe mit der Motorachse verbunden ("harmonic drive").

Das Getriebe besteht aus 3 Teilen: einer elliptischen Scheibe oder Welle (7) mit aufgezogenem verformbaren Spezialkugellager (14), einem verformbaren außenverzahnten Ring (8) und einem starren innenverzahnten Außenring (4).

Der Optiktubus dieses astronomischen Teleskops läßt sich spielfrei bewegen. Hierdurch ist das Teleskop auch für die günstige azimutale Aufstellung geeignet.

## Beschreibung

Die Erfindung betrifft ein astronomisches Teleskop.

Der Objektivtubus astronomischer Teleskope ist bekanntlich um eine Polarachse und eine Deklinationsachse verdrehbar bzw. verschwenkbar. Die Polarachse muß parallel zur Rotationsachse der Erde ausgerichtet werden. Diese Aufstellungsart nennt man auch parallaktische Montierung. Dadurch entstehen an einem Aufstellungsort des Teleskops in mittleren geographischen Breiten hohe Kippmomente durch die Schrägstellung der Polarachse, die durch eine sehr steife Auslegung der Bauelemente der Montierung, insbesondere der Gabel und der Polarachse mit ihrer Lagerung, kompensiert werden müssen. Am Äquator ist solch eine Aufstellung noch ungünstiger, wenn nicht unmöglich. Der Vorteil lag jedoch darin, daß nur die Polarachse des Teleskops mit konstanter Geschwindigkeit gedreht werden muß, damit der Optiktubus einem Himmelsobjekt nachgeführt wird.

Da die Teleskope zunehmend durch Computersteuerungen positioniert und nachgeführt werden, bereitet es mittlerweile nach dem Stand der Technik für die Computersteuerung keine Schwierigkeiten mehr, von dieser beschriebenen Teleskop-Aufstellung abzusehen und das Teleskop um 2 und mehr Achsen einem Himmelsobjekt nachzuführen.

Aus diesen Gründen sieht man heute in zunehmendem Maße für Teleskope eine azimutale Montierung vor. Bei einer solchen azimutalen Aufstellung der Montierung zeigt die eine Achse, die azimutale Achse, zum Erdmittelpunkt. Die zweite Achse, die der Deklinationsachse bei der zuerst genannten parallaktischen Aufstellung entspricht, steht auf der Azimutal-Achse senkrecht.

Diese Aufstellung stellt eine neue Anforderung an die verwendeten Getriebe: um der Bahn eines Himmelsobjektes zu folgen, kann das Teleskop nicht mehr mit konstanter Geschwindigkeit in nur einer Achse angetrieben werden. Es müssen sich beide Achsen mit nicht gleichbleibenden Geschwindigkeiten drehen. Erschwerend kommt hinzu, daß auch sich bis zu einem Ruhepunkt verlangsamende Bewegungen auftreten, die nach Erreichen des Ruhepunktes aus diesem in umgekehrter Richtung wieder herausführen.

Wegen der im Winkelsekundenbereich liegenden erforderlichen Präzision der Bewegung eines astronomischen Teleskops müssen die verwendeten Getriebe spielfrei sein, insbesondere bei der mechanisch so günstigen azimutalen Aufstellung.

Allgemeine Hinweise für die konstruktiven Anforderungen, die an ein Teleskop mit Computersteuerung zu stellen sind, gibt das Buch "Microcomputer Control of Telescopes" von Mark Trueblood und Russell Genet (Verlag Willmann-Bell, Richmond VA, U.S.A., 1985). In der Sektion VI dieses Buches werden zwar verschiedene Möglichkeiten für die Ausführung eines Antriebs diskutiert (vgl. S. 253-257), jedoch wird kein gangbarer Weg aufgezeigt, wie man zu einer technischen Realisierung kommt.

Bisher wurde die Spielfreiheit des Antriebs durch Verwendung von zwei Motoren an jeder Achse, die gegenläufig ein großes Zahnrad antreiben, erreicht. Um die erforderliche Untersetzung zu erhalten, waren große Zahnräder notwendig. Als spielfreie Getriebe kamen auch Reibradgetriebe zum Einsatz. Auch hier waren große Reibräder erforderlich, zudem müssen Reibräder an der Kontaktzone in speziellen Ölbädern laufen, um einen höheren Reibwert zu erhalten. Die Verwendung von Schneckengetrieben scheidet fast aus, da diese in spielfreier Ausführung ein äußerstes Maß an Präzision in der Herstellung erfordern.

Alle diese Bauweisen erfordern viel Raum und sind relativ schwer, was die Montierung zusätzlich belastet. Die Verwendung von zwei Motoren je Achse ist sehr aufwendig und der Energieverbrauch hoch. Durch die Verwendung von Ölbädern bestand die Gefahr der Verschmutzung der Teleskopoptik.

In Industrierobotern werden Getriebe eingesetzt, die zur Gruppe der sogenannten Überlagerungs- oder Wellengetriebe gehören und die eben beschriebenen Nachteile nicht haben. Auch sind die erforderlichen Untersetzungen in einer Stufe realisierbar. Das für die Erfindung verwendete Getriebe ist z.B. in der Fachzeitschrift "Konstruktionspraxis" (Vogel Verlag Würzburg) in den Nummern 8 (August) 1991 S. 162-164, in Nr. 12 (Dezember) 1991 S. 86-88 und in Nr. 12 (Dezember) 1992 S. 40-42 beschrieben. Die Urform dieses Getriebes ist in den U.S.-Patentschriften 2,906,143 und 2,943,513 veröffentlicht.

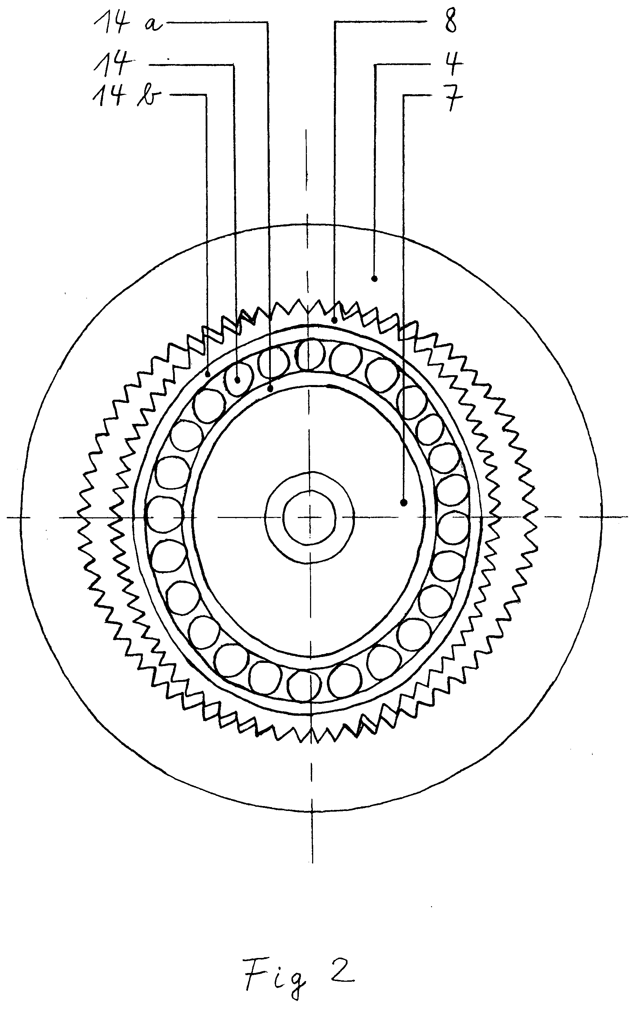

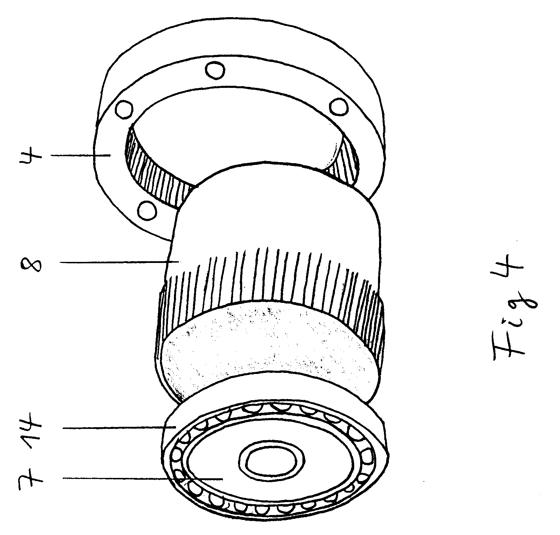

Das Getriebe besteht im Prinzip aus 3 Teilen: einem Innenteil, der aus einer Welle mit zentrischer elliptischer Scheibe (7) besteht, auf welche ein Spezialkugellager (14) aufgezogen ist; einem Mittelteil, der aus einem verformbaren außenverzahnten Ring (8) besteht, welcher permanent der Verformung durch das Getriebe-Innenteil mit seiner elliptischen Scheibe (7) mit dem Spezialkugellager (14) unterliegt; und einem Außenteil, der aus einem starren innenverzahnten Außenring (4) besteht, dessen Verzahnung mindestens einen Zahn mehr als der Ring (8) aufweist. Der Käfig und der Außenring (14b) des Spezialkugellagers (14) sind verformbar, damit sich die elliptische Form der Scheibe (7) bei Drehung dieser Scheibe dem darübergeteckten verformbaren außenverzahnten Ring (8) mitteilt und die Zähne auf den gegenüberliegenden Seiten der großen Halbachse dieser Ellipse in Eingriff sind und bei Drehung der Scheibe (7) die beiden gegenüberliegenden Zahneingriffsbereiche sich in gegenläufiger Drehung weiterbewegen. Die Figur 2 zeigt die wesentlichen Merkmale des Getriebes in der Aufsicht, die Figur 4 ist eine Explosionszeichnung einer Ausführungsform des Getriebes.

Es ist daher Aufgabe der Erfindung, die vorher geschilderten Nachteile zu vermeiden und eine kompakte Lösung zu finden, die auch den geschilderten technischen Anforderungen - insbesondere spielfreie Bewegung des Optiktubus - genügt.

Die Lösung dieser Aufgabe wird durch eine Kombination des Teleskops mit einem an sich bekannten Getriebe mit den im Anspruch 1 kennzeichnenden Merkmalen erreicht.

Eine vorteilhafte Ausgestaltung der Erfindung ist in Anspruch 2 angegeben. Die Weiterbildung nach Anspruch 2 ermöglicht es, die Motor-Getriebe-Einheit direkt an eine Teleskopachse anzusetzen. Hierdurch wird es möglich, schon bestehende, evtl. ältere Teleskope, kostengünstig mit einem spielfreien Antrieb zu versehen.

Weitere vorteilhafte Ausgestaltungen der Erfindung sind in den Ansprüchen 3 bis 6 angegeben.

Eine weitere vorteilhafte Ausgestaltung der Erfindung ist in Anspruch 7 angegeben. Eine sehr hohe Präzision wird durch die Anordnung der Teleskopachse, des Encoders, des Getriebes und des Antriebsmotors auf einer gemeinsamen Achse erreicht.

Es ist daher als überraschend zu bewerten, daß durch ein anmeldungsgemäß verwendetes einfaches, im Prinzip nur aus 3 Teilen bestehendem Getriebe, ein spielfreies Einstellen und Nachführen eines astronomischen Teleskops möglich ist, ja darüber hinaus auch die kritischen sehr langsamen Kriechgeschwindigkeiten nahe den Reversionspunkten im Bereich von unter einer Winkelsekunde beherrscht werden, und ebenso aus den Reversionspunkten spielfrei mit Richtungsumkehr wieder herausgefahren werden kann, was auch eine azimutale Aufstellung des Teleskops ermöglicht. Aber auch bei der herkömmlichen parallaktischen Teleskopaufstellung erhält man durch Kombination des Teleskops mit dem beschriebenen Getriebe eine spielfreie Bewegung des Optiktubus. Weiterhin erlaubt es die große Steifigkeit des Getriebes bei gleichzeitig kompakter Bauweise, bestimmte Teleskopteile, wie z. B. die Gabel bei Teleskopen mit Gabelmontierung, die sonst wegen der großen Abmessungen herkömmlicher Getriebe ausladend und groß dimensioniert werden mußten, jetzt gedrungen und klein zu bauen. Dadurch bereitet es wesentlich weniger Aufwand, das dann kleinere Kippmoment aufzufangen. Die Teleskopmontierung wird auch hier wesentlich kompakter und dadurch leichter und kostengünstiger. Zudem ist immer nur *ein* Motor pro Antriebsachse nötig.

Nachstehend ist eine Ausführungsform des erfindungsgemäßen astronomischen Teleskops an Hand der Zeichnungen beispielsweise beschrieben.

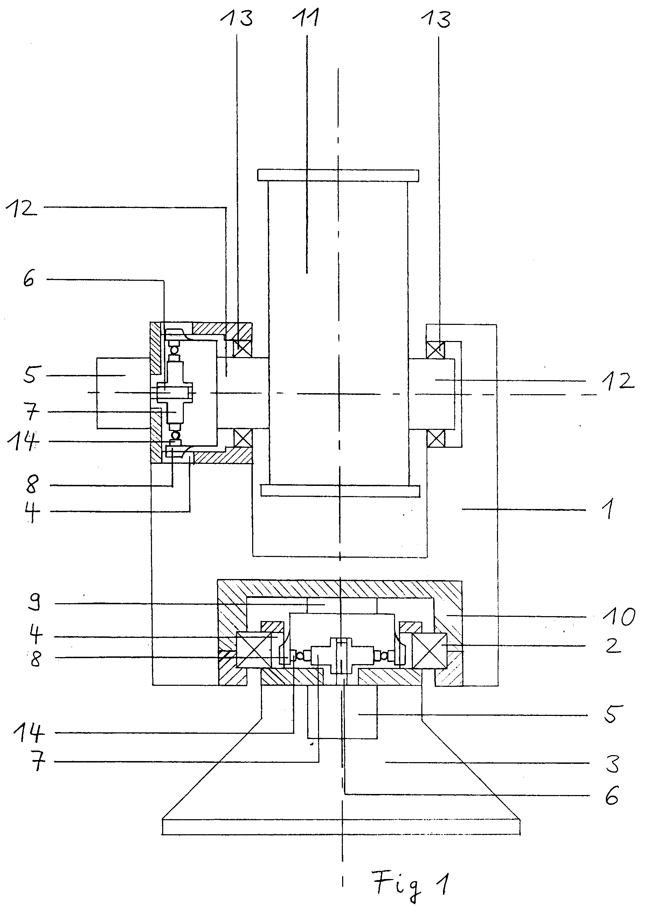

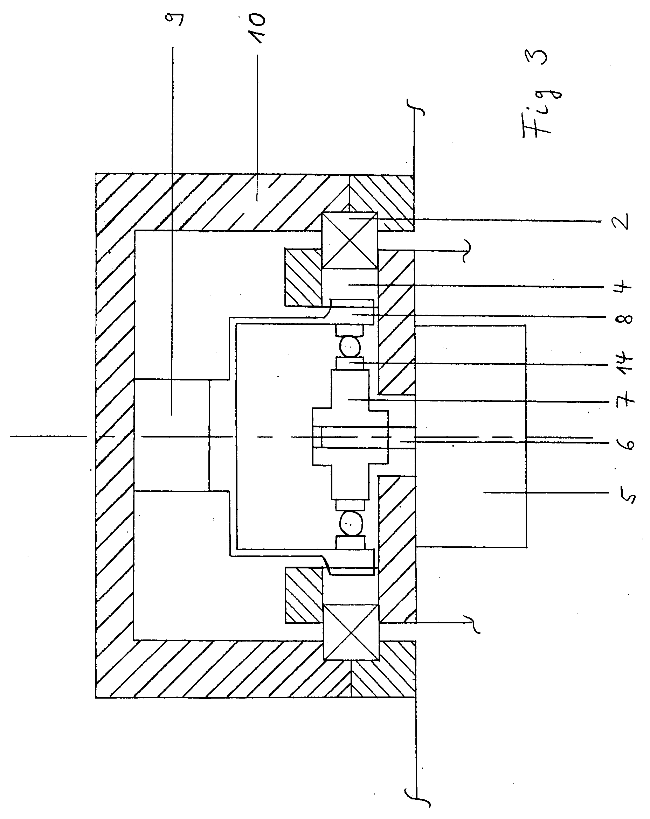

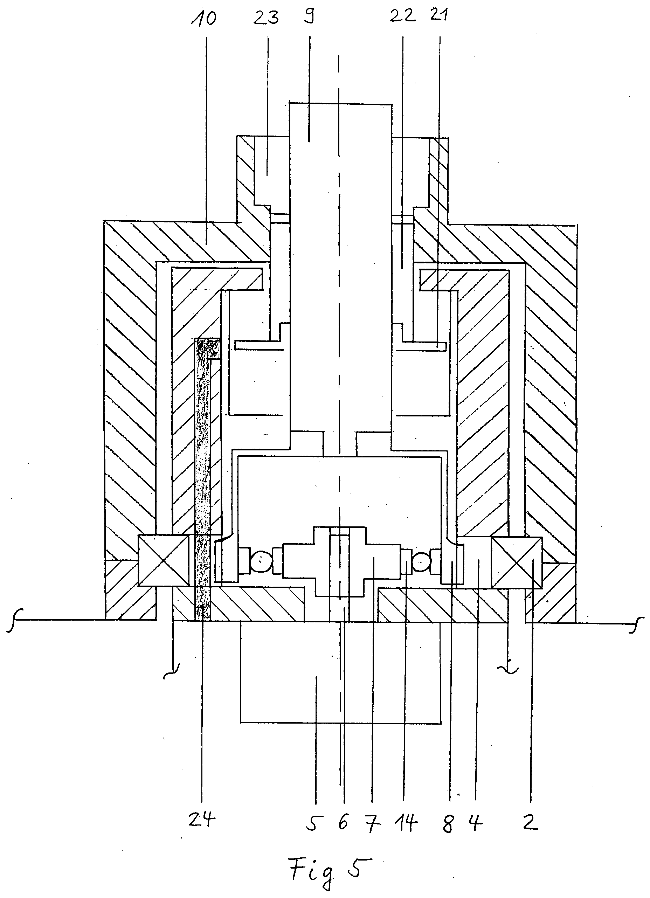

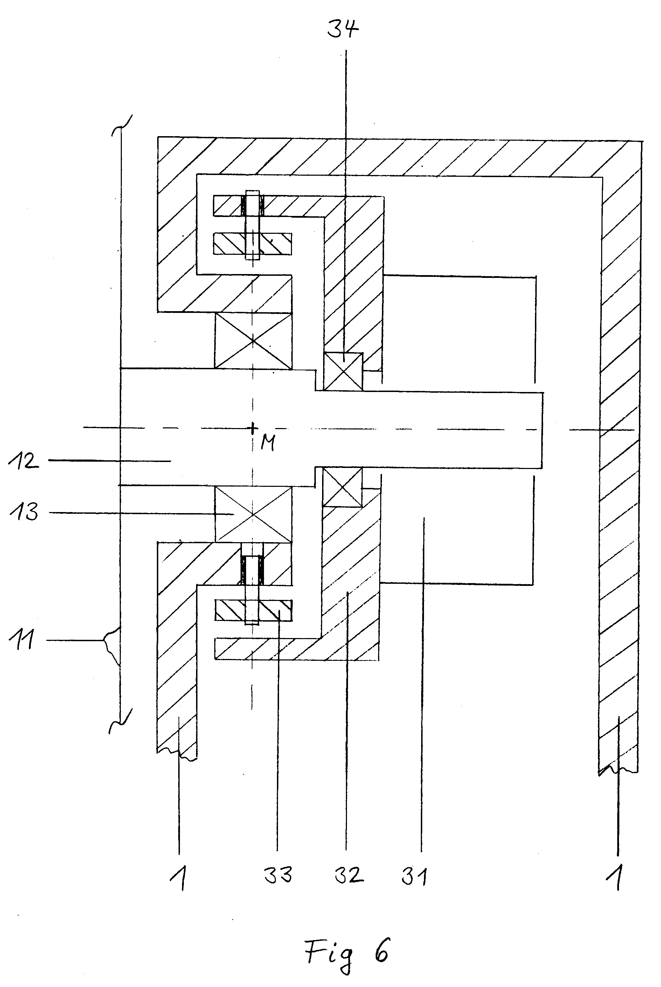

Die Figur 1 zeigt das Teleskop in einer teilweise längsgeschnittenen Seitenansicht. Die Figur 2 zeigt das Getriebe in der Draufsicht. Die Figur 3 ist eine Vergrößerung der senkrechten Teleskopachse von Figur 1 und zeigt die gewählte Ausführungsform des verformbaren außenverzahnten Ringes (8). Die Figur 4 ist eine Explosionszeichnung der gewählten Ausführungsform des Getriebes. Die Figuren 5 und 6 zeigen eine Ausgestaltung mit Encoder auf den Teleskopachsen, der Azimut- und der Elevationsachse.

Die Gabel 1 des Teleskops ist in der Figur 1 über ein Lager 2 mit dem Sockel 3 drehbar verbunden. Mit dem Sockel 3 sind der starre Außenring 4 des Getriebes, der Innenring des Lagers 2 des Teleskops und ein Antriebsmotor 5 verbunden. Die Welle 6 des Antriebsmotors 5 ist mit der elliptischen Scheibe 7 des Getriebes verbunden. Die Drehung der Motorwelle 6 und der elliptischen Scheibe 7 hat zur Folge, daß sich der außenverzahnte Ring 8 elliptisch verformt. Dadurch wird dieser auf den gegenüberliegenden Seiten der großen Ellipsenhauptachse der elliptischen Scheibe 7 in der Innenverzahnung des starren Außenrings 4 in Gegenrichtung gedreht. Bei einer Ausführung des Getriebes mit z. B. 2 Zähnen mehr in der Verzahnung des starren Außenrings 4 als in der Verzahnung des Rings 8, wird die Verzahnung des Rings 8 bei einer Umdrehung der Motorwelle 6 und der mit ihr verbundenen elliptischen Scheibe 7 um 2 Zähne relativ zum Außenring 4 weiterbewegt. Der außenverzahnte verformbare Ring 8 hat einen Flansch, an welchem eine Abtriebswelle 9 befestigt ist, welche über das rohr- bzw. büchsenförmige Bauteil 10 des Teleskops mit der Gabel 1 und dem Außenring des Lagers 2 des Teleskops verbunden ist. Dies ist in der Figur 3 vergößert mit mehr Detail dargestellt.

Der Tubus 11 wiederum ist mit seinen beiden Lagerzapfen 12 durch zwei Lagerungen 13 mit der Gabel 1 verbunden. Auf der in der Figur linken Seite der Gabel 1 ist der Lagerzapfen 12 mit dem Flansch des Ringes 8 des Getriebes verbunden. An diesem Gabelarm sind der Antriebsmotor 5, welcher mit seiner Abtriebswelle 6 mit der elliptischen Scheibe 7 des Getriebes verbunden ist, befestigt. Der Außenring 4 des Getriebes ist auch mit dem Arm der Gabel 1 verbunden, so daß der Abtrieb für den Optiktubus wieder über den verformbaren außenverzahnte Ring 8 auf den Lagerzapfen 12 erfolgt.

Bei diesem Getriebe sind ständig ca. 30 Prozent der Zähne im Eingriff. Dadurch wird die hohe, für astronomische Teleskope erforderliche Steifigkeit bei kompakter Bauweise erreicht. Bei gleichzeitiger Spielfreiheit des Getriebes wird eine günstige, von Kippmomenten freie Aufstellung des Teleskops ermöglicht, da keine Achse parallel zur Rotationsachse der Erde ausgerichtet werden muß.

Die Figur 2 zeigt eine Frontansicht des Getriebes von Figur 1. Hier ist deutlich das verformbare Spezialkugellager 14 mit seinem auf die elliptische Scheibe 7 montierten Innenring 14a und dem der Verformung unterliegenden Außenring 14b zu erkennen. Über das Lager 14 wird die umlaufende Verformung der elliptischen Scheibe 7 dem verformbaren außenverzahnten Ring 8 aufgeprägt, was den Umlauf der auf der großen Ellipsenachse gegenüberliegenden Zahneingriffsbereiche bewirkt. Hierdurch entsteht die hohe Untersetzung in einer Stufe bei gleichzeitiger Spielfreiheit und hoher Steifigkeit.

Figur 5 zeigt die azimutale oder senkrechte Teleskopachse in einer Ausführung mit Encoder. Hier befindet sich die Abtriebswelle 9, die mit dem rohr- bzw. büchsenförmigen Bauteil 10, das eine Teleskopachse ist, verbunden ist, das Getriebe, der Antriebsmotor 5 und eine Encoderscheibe 21 auf einer gemeinsamen Achse. Dadurch ist die Genauigkeit des Antriebs sehr hoch. Die Encoderscheibe 21 sitzt auf einer Hülse, die durch die Abtriebswelle 9 geführt ist, aber nicht mit dieser, sondern mit dem rohr- bzw. büchsenförmigen Bauteil 10 verbunden ist. Dies ist günstiger, da auf die Abtriebswelle 9 Torsionskräfte bei Beschleunigung oder Abbremsen der Teleskopachse einwirken.

Das rohrförmige Bauteil 10 ist durch das Verbindungselement 23 mit der Abtriebsachse 9 verbunden. Eine Bohrung 24 ist für das Encoderkabel vorgesehen.

Figur 6 zeigt den rechten Teil der waagrechten, der Elevationsachse von Figur 1 in einer Ausführung mit eingebautem Encoder. Hier im rechten Gabelarm befindet sich der Lagerzapfen 12 in dem Lager 13, das als Pendelkugellager oder Pendelrollenlager ausgeführt ist, um Fluchtungsfehler der beiden Lagerzapfen 12 auszugleichen. Der Encoder 31 ist deswegen in einem Kardangelenk verkippbar montiert, um den Kippbewegungen der Achse folgen zu können. Der Mittelpunkt M dieser Anordnung ist im Mittelpunkt des Pendelkugellagers wie in Figur 6 gezeigt. Die kardanische Aufhängung des Encoders besteht aus einem äußeren Kardanring 32, einem innerem Kardanring 33 und einem Lager 34, das den Encoder zum Lagerzapfen zentriert.

Die eben beschriebenen Ausführungsmöglichkeiten sollen aber nicht den Gegenstand der Erfindung einengen. Das verwendete Getriebe ist so beschaffen, daß jedes der drei beschriebenen Getriebebauteile die Funktion des Antriebs, Abtriebs und des feststehenden Teils übernehmen kann. Desgleichen ist in der Ausbildungsform der beschriebenen Getriebebauteile mit den Merkmalen des Anspruchs 1 viel Variationsmöglichkeit gegeben. Man kann z. B. den verformbaren außenverzahnten Ring 8 nicht nur als ein büchsenförmiges Bauteil, sondern mit einem Flansch ausführen, oder man beläßt ihn als ringförmiges Bauteil. Es ist auch eine Ausführung des Getriebes mit zwei starren innenverzahnten Außenringen möglich, wobei ein Außenring wenigstens einen Zahn in der Verzahnung mehr aufweist, als die anderen Verzahnungen. Zur Erhöhung der Steifigkeit kann man - besonders bei einer Ausführungsform des Getriebes mit zwei starten innenverzahnten Außenringen 4 - das Getriebe auch mit zwei Speziallagern 14 ausführen.

Ein Hersteller dieser Getriebe ist die Firma Harmonic Drive. Eine Auswahl von möglichen Ausführungsformen und Antriebsanordnungen des verwendeten Getriebes sind im Harmonic Drive Anwendungshandbuch, 2. Auflage, November 1992 auf den Seiten 4 und 5 beschrieben.

Es sind auch Ausführungsformen des angemeldeten astronomischen Teleskops mit mehr als zwei Achsen denkbar. So ist z. B. eine Ausführungsform mit drei Achsen, die eine bessere Schwerkbarkeit des Teleskops durch den Zenith ergibt, herstellbar.

Die vorliegende Erfindung schließt auch die Verwendung von Getriebeeinheiten mit integriertem Kreuzrollenlager mit ein.

Durch die beschriebenen Merkmale der Erfindung ist es möglich, astronomische Teleskope sehr steif, spielfrei, kompakt und letztendlich auch kostengünstig herzustellen.

## Patentansprüche

1. Astronomisches Teleskop,
**dadurch gekennzeichnet,** daß der Optiktubus (11) um mindestens eine der Achsen, um welche er schwenkbar gelagert ist, von einem Motor (5) aus untersetzt antreibbar ist, wobei die Abtriebswelle (6) des Motors mit der Antriebswelle des Optiktubus über mindestens ein an sich bekanntes sogenanntes Überlagerungs- oder Wellengetriebe verbunden ist, das ein drehbares im wesentlichen elliptisches Element (7) aufweist, auf welches mindestens ein Speziallager (14) mit einem verformbaren Käfig und einem verformbaren Außenring (14b) aufgezogen ist, und das weiterhin einen verformbaren außenverzahnten Ring (8) aufweist, welcher durch das im wesentlichen elliptische Element (7) und das/die Speziallager (14) ständig verformt wird, und das weiterhin mindestens einen starten innenverzahnten Außenring (4) aufweist, dessen Verzahnung mit der Verzahnung des verformbaren Ringes (8) in Eingriff ist, wobei mindestens ein Außenring eine andere Anzahl von Zähnen in der Verzahnung aufweist, als der verformbare außenverzahnte Ring (8).

2. Astronomisches Teleskop nach Anspruch 1,
**dadurch gekennzeichnet,** daß das Getriebe mit einem Motor zu einer Einheit zusammengebaut ist.

3. Astronomisches Teleskop nach Anspruch 1,
**dadurch gekennzeichnet,** daß das Getriebe mit einem Encoder und einem Motor zu einer Einheit zusammengebaut ist.

4. Astronomisches Teleskop nach Anspruch 1,
**dadurch gekennzeichnet,** daß das Getriebe mit einer Lagerung und mit oder ohne einem Encoder zu einer Einheit zusammengebaut ist.

5. Astronomisches Teleskop nach Anspruch 1,
**dadurch gekennzeichnet,** daß das Getriebe mit einem Motor, einer Lagerung und mit oder ohne einem Encoder zu einer Einheit zusammengebaut ist.

6. Astronomisches Teleskop nach Anspruch 1,
**dadurch gekennzeichnet,** daß sich auf der Teleskopachse und/oder der Getriebeachse ein Encoder befindet.

7. Astronomisches Teleskop nach Anspruch 1,
**dadurch gekennzeichnet,** daß sich Teleskopachse, Getriebe, Encoder und Motor auf einer gemeinsamen Achse befinden.
